# FASCICULE DE BREVET EUROPEEN

(11) **EP 4 300 053 B1**
(45) Date de publication et mention de la délivrance du brevet: **14.08.2024**
(21) Numéro de dépôt: 23174989.6
(22) Date de dépôt: 24.05.2023
(51) Int. Cl.: G01G 19/07

(54) **PROCEDE D'APPRENTISSAGE D'AU MOINS UN MODELE D'INTELLIGENCE ARTIFICIELLE D'ESTIMATION EN VOL DE LA MASSE D'UN AERONEF A PARTIR DE DONNEES D'UTILISATION**
VERFAHREN ZUM TRAINIEREN MINDESTENS EINES MODELLS DER KÜNSTLICHEN INTELLIGENZ ZUR SCHÄTZUNG DER MASSE EINES FLUGZEUGS WÄHREND DES FLUGS AUF DER GRUNDLAGE VON NUTZUNGSDATEN
METHOD FOR TRAINING AT LEAST ONE ARTIFICIAL INTELLIGENCE MODEL FOR ESTIMATING THE MASS OF AN AIRCRAFT DURING FLIGHT BASED ON UTILISATION DATA

(30) Priorité: 01.07.2022 FR 2206717
(43) Date de publication de la demande: 03.01.2024
(73) Titulaire: Airbus Helicopters, 13725 Marignane Cedex (FR)
(72) Inventeur: MECHOUCHE, Ammar, 13100 AIX EN PROVENCE (FR); ROCHER, Antoine, 13960 SAUSSET-LES-PINS (FR); AUBIN, Valentin, 13800 ISTRES (FR)
(74) Mandataire: GPI Brevets

(56) Documents cités:
- FR-A1- 2 988 851
- FR-A1- 3 103 047

## Description

La présente invention concerne un procédé d'apprentissage d'au moins un modèle d'intelligence artificielle à apprentissage automatique. L'invention se situe dans le domaine des méthodes permettant d'estimer une masse d'un aéronef à tout moment pendant un vol et au sol.

En effet, une telle estimation précise de la masse de l'aéronef peut avoir des effets sur la prévision des performances en vol de l'aéronef, mais également sur une maintenance conditionnelle de l'aéronef.

Selon un procédé connu la charge utile d'un aéronef est renseignée par l'équipage ou estimée à partir d'informations renseignées par l'équipage telles que le nombre de passagers embarqués et en utilisant une masse forfaitaire pour chacun des passagers. Dés lors, la masse totale de l'aéronef n'est pas maitrisée, et la charge utile ne peut pas être calculée ou renseignée avec suffisamment de précision. De plus, la mise à jour de la charge utile par l'équipage peut être sujette à des oublis.

Selon un autre procédé décrit par exemple dans le document EP3940360, la masse d'un aéronef et la position d'un centre de masse de l'aéronef sont estimées au moyen de capteurs de pressions agencés au niveau de trains d'atterrissage. Cependant, tous les aéronefs ne sont pas équipés de trains d'atterrissage instrumentés permettant de réaliser ces estimations. De plus, une telle estimation ne peut être réalisée qu'au sol.

Selon un autre procédé des données de vol d'un aéronef et un modèle d'intelligence artificielle à apprentissage automatique utilisant ces données de vol sont mis en oeuvre pour estimer une masse de l'aéronef.

La qualité d'un tel procédé dépend notamment de l'apprentissage du modèle. L'invention vise ainsi plus précisément un procédé d'apprentissage d'au moins un modèle d'intelligence artificielle à apprentissage automatique d'estimation en vol de la masse d'un aéronef à partir de données d'utilisation.

Le document US5987397A divulgue quant à lui un procédé pour réaliser une estimation de la masse d'un aéronef avec un modèle consistant à corréler les paramètres de vol et la masse enregistrée par l'aéronef lors d'essais en vol dédiés.

Le document FR3036789 divulgue une estimation de la masse d'un aéronef au moyen de paramètres de performance et le document EP1462897 propose quant à lui de réaliser une estimation de la masse d'un aéronef à partir de modèles à réseaux de neurones choisis en fonction d'une phase de vol.

Les données d'apprentissage de ces modèles d'intelligence artificielle à apprentissage automatique sont obtenues au moyen d'essais en vol. Ces données d'apprentissage des modèles peuvent se révéler être d'une quantité et d'une représentativité limitées.

Le document FR 3 103 047A1 décrit quant à lui un procédé d'apprentissage par réseau de neurones pour aider à l'atterrissage d'un avion sur une piste notamment en cas de conditions météorologiques difficiles.

Le procédé comprend au moins des étapes de :
- recevoir un jeu de données d'apprentissage labélisées comprenant des données capteur associées à une vérité-terrain représentant au moins une piste d'atterrissage et une rampe d'approche ;
- exécuter un algorithme d'apprentissage profond par réseau de neurones artificiels sur le jeu de données d'apprentissage, ledit algorithme d'apprentissage profond utilisant une fonction de coût dite trapèze de seuil de piste, paramétrée pour la reconnaissance d'un seuil de piste et de rampes d'approche ; et
- générer un modèle d'intelligence artificielle entrainé pour l'aide à l'atterrissage d'aéronef de reconnaissance de piste.

Ainsi, le document FR 3 103 047A1 décrit une acquisition en vol d'au moins un jeu de données de vol acquis avec plusieurs senseurs à un même instant t.

Le document FR 2 988 851A1 décrit quant à lui un procédé de détermination d'un état de crédibilité de mesures d'un capteur d'incidence d'un aéronef qui comprend au moins un test (90, 100) de cohérence entre des mesures d'incidence dudit capteur, et des mesures d'une caractéristique de vol de l'aéronef, distincte de l'incidence.

Un tel procédé comprend les étapes suivantes:
- détermination d'une valeur de l'incidence à partir dudit capteur, - détermination de ladite caractéristique de vol,
- détermination (94, 106) d'une valeur d'un indicateur de cohérence de la valeur de l'incidence avec ladite caractéristique,
- activation d'un état de crédibilité faible (76), dans lequel les mesures dudit capteur d'incidence sont jugées non fiables, ou d'un état de crédibilité intermédiaire (107), dans lequel les mesures dudit capteur d'incidence sont jugées cohérentes avec ladite caractéristique de vol, en fonction de la valeur dudit indicateur de cohérence.

La présente invention a alors pour objet de proposer un procédé d'apprentissage d'au moins un modèle d'intelligence artificielle à apprentissage automatique permettant de s'affranchir des limitations mentionnées ci-dessus. Un tel procédé d'apprentissage permet en effet de construire des modèles robustes et adaptés aux missions réelles d'un utilisateur de l'aéronef pour estimer à tout instant lors d'un vol ou au sol la masse de l'aéronef.

L'invention se rapporte donc à un procédé d'apprentissage d'au moins un modèle d'intelligence artificielle à apprentissage automatique, ledit au moins un modèle d'intelligence artificielle à apprentissage automatique étant configuré pour être mémorisé dans une mémoire équipant un aéronef ou une station sol, et développé pour être mis en oeuvre lors d'au moins une phase de vol prédéterminée d'au moins un aéronef d'un même type.

Un tel procédé comporte une réalisation d'une pluralité de vols effectués par au moins un utilisateur ou client du ou des aéronefs. Dès lors, pour au moins un vol parmi la pluralité de vols, le procédé comporte une acquisition en vol d'au moins un jeu de données de vol acquis avec plusieurs senseurs au même instant t.

Selon l'invention un tel procédé est remarquable en ce que, pour ledit au moins un vol parmi la pluralité de vols, le procédé comporte les étapes suivantes :
- réalisation d'au moins un test de cohérence prédéterminé avec au moins un contrôleur de cohérence, ledit au moins un test de cohérence permettant de vérifier qu'une masse de référence fiable est calculée ou calculable, - calcul avec au moins un contrôleur de calcul de masse d'au moins une masse calculée de l'aéronef en fonction d'au moins une masse choisie parmi le groupe comportant une masse courante d'un carburant embarqué, une masse d'un carburant consommé, une masse préalablement mesurée dudit aéronef, une masse à vide dudit aéronef, une charge utile préalablement renseignée par un utilisateur, une masse mesurée par un équipement connecté et de ladite masse de référence,
- si ledit au moins un test de cohérence est validé, mémorisation dudit au moins un jeu de données de vol et de ladite au moins une masse calculée à l'instant t, chaque jeu de données de vol mémorisé associé à une masse calculée formant un jeu de données d'apprentissage dudit au moins un modèle d'intelligence artificielle à apprentissage automatique, et
en ce que le procédé comporte une utilisation des jeux de données d'apprentissage pour programmer ledit au moins un modèle d'intelligence artificielle à apprentissage automatique, ledit au moins un modèle d'intelligence artificielle à apprentissage automatique étant configuré pour estimer à tout moment une masse instantanée estimée de l'aéronef, ou d'un autre aéronef d'un même type, à partir d'un jeu de données de vol courant.

Autrement dit, en fonction d'un résultat du test de cohérence effectué préalablement à une mission de l'aéronef, le ou les jeux de données de vol acquis et la ou les masses calculées correspondantes acquis au même instant t sont conservées, puis utilisées pour programmer ledit au moins un modèle d'intelligence artificielle à apprentissage automatique.

Par « instant t », on entend désigner une période précise et limitée dans le temps par exemple d'une ou plusieurs secondes, voire d'une ou plusieurs minutes permettant de réaliser l'ensemble des acquisitions des données de vol et d'un calcul de la masse calculée.

En outre, une mission effectuée par l'aéronef ne contenant pas de phase de vol propice au calcul de la masse de l'aéronef ne sera pas traitée et ne fournira aucun jeu de données d'apprentissage.

Par ailleurs, l'expression « vérifier qu'une masse de référence fiable est calculée ou calculable » signifie qu'on effectue un contrôle de la disponibilité, de l'existence ou d'un calcul possible d'une masse de référence. Cette masse de référence est en outre considérée comme étant la masse totale de l'aéronef comprenant la masse de l'équipage et des passagers éventuels, la masse du fret ou des bagages éventuellement embarqués, la masse mesurée par un équipement connecté et la masse du carburant présent. Cette masse de référence correspond alors à la masse totale au moment où est effectué le test de cohérence.

Un test de cohérence peut alors être considéré comme étant validé pendant un vol ou une session de plusieurs vols entre une mise sous tension du ou des contrôleurs de cohérence jusqu'à une mise hors tension du ou des contrôleurs de cohérence. Alternativement, un test de cohérence peut également être validé pour une période prédéterminée de par exemple 24 heures ou encore pour un nombre de décollages et d'atterrissages prédéterminé.

La masse calculée correspond quant à elle à une évolution de la masse totale de l'aéronef après avoir effectué un test de cohérence et donc à partir de la masse de référence. Cette évolution de la masse peut être notamment fonction d'une quantité de carburant consommée ou d'une quantité de carburant ajoutée dans un réservoir ou encore d'une charge utile modifiée. Une telle masse calculée peut être calculée à tout instant pendant le vol ou bien encore après un vol en utilisant des jeux de données de vol mémorisés suite au test de cohérence.

En outre, le ou les contrôleurs de cohérence permettant de réaliser le test de cohérence et le ou les contrôleurs de calcul de masse peuvent être disjoints l'un de l'autre ou les uns des autres ou encore former un ensemble monolithique.

Par exemple, un premier ensemble monolithique apte à réaliser à la fois un test de cohérence et un calcul de la masse calculée peut être agencé dans l'aéronef et un ensemble monolithique apte à réaliser un test de cohérence et un calcul de la masse calculée peut être agencé en dehors de l'aéronef, par exemple dans une station sol.

Plusieurs masses successives peuvent alors être calculées lors d'un vol de l'aéronef. Une seule masse calculée peut cependant correspondre à l'instant t.

Ces jeux de données de vol sont acquis par des senseurs qui peuvent être de différentes natures et aptes à identifier des paramètres de déplacement de l'aéronef ou encore des paramètres physico-chimiques liés par exemple à l'environnement dans lequel évolue l'aéronef. En outre, chaque senseur peut comporter un ou plusieurs capteurs et éventuellement un calculateur pour convertir une mesure physique, électromagnétique ou optique en une autre grandeur par au moins un calcul.

Par senseur, on entend ici un capteur physique capable de mesurer directement le paramètre en question, mais aussi un système pouvant comprendre un ou plusieurs capteurs physiques ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

Par ailleurs, la masse de référence peut en outre être considérée comme étant calculable sous plusieurs conditions indépendantes les unes des autres ou cumulatives.

Par exemple, une masse de référence peut être considérée comme calculable si la charge utile de l'aéronef est bien renseignée par un pilote avant une mission ou avant une série de missions. La masse de référence peut en effet être calculée en ajoutant une masse à vide de l'aéronef avec la masse de carburant embarqué et la charge utile comprenant la masse de l'équipage, des bagages, du fret, mesurée par un équipement connecté et des passagers éventuels.

Par ailleurs, des conditions sur la valeur renseignée de la charge utile peuvent également permettre de garantir le caractère fiable de la masse de référence qui sera calculée. La masse de référence peut alors être considérée comme fiable si la charge utile renseignée par le pilote est différente d'une valeur nulle, si elle est supérieure à un premier seuil prédéterminé ou encore si elle est inférieure à un second seuil prédéterminé.

En outre, un tel procédé d'apprentissage permet alors de construire et d'appliquer un modèle d'intelligence artificielle à apprentissage automatique pour estimer à tout instant la masse d'un aéronef à partir des données de vol nombreuses, réelles et significatives des utilisateurs ou des clients.

Un tel procédé permet ainsi d'écarter les données de vol possiblement erronées ou non adaptées pour ne pas perturber l'apprentissage du ou des modèles à apprentissage automatique.

De plus, un tel procédé peut être applicable à tout type d'aéronefs, notamment un hélicoptère, sans nécessiter l'utilisation d'une instrumentation supplémentaire.

La masse de référence peut en outre correspondre à une masse calculée par un système avionique équipant l'aéronef.

Le procédé peut de plus comporter une ou plusieurs des caractéristiques qui suivent prises indépendamment ou bien combinées entre elles.

Notamment lorsqu'elle est calculée, la fiabilité de la masse de référence calculée peut être déterminée de différentes manières.

Selon un premier exemple de réalisation de l'invention, la masse de référence peut être définie en fonction d'une masse estimée de l'aéronef à partir de mesures issues de plusieurs capteurs, chaque capteur étant agencé sur chaque atterrisseur de l'aéronef, ledit au moins un test de cohérence comprenant un calcul d'un écart entre ladite masse calculée et la masse estimée, puis une vérification que cet écart est inférieur à une valeur de seuil d'écart.

Par suite, la masse calculée et enregistrée dans le système avionique de l'aéronef est alors comparée avec la masse estimée déterminée à l'aide des signaux issus des capteurs. Comme précédemment pour les données de vol, ces capteurs peuvent être des capteurs physiques capables de mesurer directement une masse sur chaque atterrisseur, mais aussi un système pouvant comprendre un ou plusieurs capteurs physiques ainsi que des moyens de traitement du signal permettant de fournir une estimation de la masse à partir des mesures fournies par ces capteurs physiques.

Ces capteurs peuvent ainsi être choisis parmi le groupe comportant les capteurs de force, les capteurs de pression, les capteurs de déplacement, les capteurs de position et les capteurs de déformation.

La valeur de seuil prédéterminée peut être mémorisée dans une mémoire embarquée dans l'aéronef et obtenue par des essais ou des vols préalablement effectués par l'aéronef ou un autre aéronef du même type. Par exemple, la valeur de seuil prédéterminée peut correspondre à un pourcentage de la masse estimée par les capteurs.

Dans ce cas, la masse de référence peut être choisie parmi la masse calculée précédemment, la masse estimée ou encore peut être calculée au moins en fonction de la masse estimée ou calculée par exemple en faisant une moyenne entre la masse estimée et la masse calculée.

Selon un deuxième exemple de réalisation de l'invention, la masse de référence peut être définie en fonction d'une masse théorique vérifiée de l'aéronef, ledit au moins un test de cohérence comprenant une vérification d'un paramétrage de la masse théorique vérifiée.

La masse théorique vérifiée est obtenue en s'assurant, préalablement à un vol de l'aéronef, que la masse de l'aéronef est bien renseignée dans le système avionique.

Le test de cohérence consiste alors à vérifier que le paramétrage de la masse théorique vérifiée a été mis en oeuvre par exemple par le pilote ou un membre de l'équipage.

Par exemple, la masse théorique vérifiée peut être par défaut choisie égale à une valeur nulle. Le test de cohérence consiste alors à vérifier que cette masse théorique vérifiée est supérieure strictement à 0.

Dans ce cas, la masse de référence peut être choisie égale à la masse théorique vérifiée ou encore peut être calculée au moins en fonction de la masse théorique vérifiée par exemple en appliquant un coefficient de sécurité à la masse théorique vérifiée.

Selon un troisième exemple de réalisation de l'invention, la masse de référence peut être définie en fonction d'une masse théorique calculée de l'aéronef, la masse théorique calculée étant obtenue par ledit au moins un contrôleur de calcul de masse à partir d'au moins une information paramétrée avec une interface homme-machine de l'aéronef par l'utilisateur préalablement audit au moins un test de cohérence, ledit au moins un test de cohérence comprenant une vérification que ladite au moins une information a été paramétrée.

Une telle masse théorique calculée de l'aéronef peut être obtenue en calculant, préalablement à un vol de l'aéronef, la masse de l'aéronef en fonction d'une mise à jour de la charge utile renseignée par le pilote.

Le test de cohérence peut ainsi vérifier une mise à jour de la charge utile effectuée par le pilote avant le vol grâce à une saisie ou un enregistrement de la ou des informations.

Dans ce cas, la masse de référence peut être choisie égale à la masse théorique calculée ou encore peut être calculée au moins en fonction de la masse théorique calculée par exemple en appliquant un coefficient de sécurité à la masse théorique calculée.

Avantageusement, les données de vol peuvent présenter des données relatives à au moins deux paramètres de vol choisis parmi le groupe comportant une vitesse de l'aéronef par rapport à l'air, une vitesse verticale de l'aéronef par rapport au sol, une vitesse longitudinale de l'aéronef par rapport au sol, une vitesse latérale de l'aéronef par rapport au sol, une accélération verticale de l'aéronef par rapport au sol, un débit de carburant alimentant un moteur de l'aéronef, une vitesse de rotation d'un rotor équipant l'aéronef, une direction du vent, une vitesse du vent, une quantité de carburant embarquée dans l'aéronef, une trajectoire de l'aéronef selon des mouvements en lacet, l'attitude de l'aéronef, une densité de l'air, une température de l'air, une incidence d'une voilure de l'aéronef, une altitude de l'aéronef, une puissance consommée par au moins un moteur de l'aéronef, des positions de commandes de vol et des positions des pales d'un rotor et/ou d'une hélice.

Pour chaque vol, on peut alors découper l'enregistrement des différents jeux de données de vol en différentes phases. Sur l'ensemble des vols découpés, on conserve uniquement les phases de vol qui optimisent le calcul de la masse calculée de l'aéronef et qui sont présentes dans une grande proportion des missions effectuées par l'utilisateur de l'aéronef.

En outre, les données de vol des jeux de données de vol peuvent être fournis par des équipements préexistants de l'aéronef tels que par exemple un système de gestion de vol connu sous l'expression anglaise « Flight Managment System » ou son acronyme FMS, un calculateur de données aérodynamiques connu sous l'expression anglaise « Air Data Computer » ou son acronyme ADC, un système de mesure de cap et d'attitude connu sous l'expression anglaise « Attitude And Heading Reference System » ou son acronyme AHRS, un altimètre radar Rad Alt et un système de localisation par satellites connu sous l'expression anglaise « Global Navigation Satellite System » ou son acronyme GNSS.

Le calculateur de données aérodynamiques ADC peut ainsi fournir l'altitude barométrique et la vitesse d'un aéronef

Le système de mesure de cap et d'attitude AHRS peut quant à lui fournir des informations d'attitude et de cap, d'accélérations et de taux de montée ou de descente de l'aéronef.

Avec l'entrée de l'ADC, l'AHRS fournit une vitesse verticale instantanée.

Avec les entrées du GNSS, du FMS, l'AHRS fournit une position de navigation et une vitesse sol combinées dans chaque direction.

L'altimètre radar Rad Alt fournit la hauteur de l'aéronef au-dessus du sol ou de l'eau survolé.

Le système de gestion de vol FMS comprend généralement un affichage et un dispositif d'interface tel qu'un panneau de commande. Le FMS a pour fonction de programmer des points de passage et de coordonner les plans de vol de l'aéronef. Le système de positionnement par satellites GNSS est généralement un sous-système du FMS.

En pratique, préalablement à l'utilisation des jeux de données d'apprentissage, le procédé peut comporter un décompte pour compter un nombre N des jeux de données d'apprentissage et une comparaison entre le nombre N et une valeur de seuil prédéterminée S.

Par suite, tant que les jeux de données d'apprentissage ne sont pas suffisamment nombreux, le procédé les mémorise dans une mémoire qui peut être embarquée dans l'aéronef, voire dans une mémoire d'une station sol, sans les utiliser. Une telle valeur de seuil prédéterminée S peut donc également être stockée dans une mémoire qui peut être embarquée dans l'aéronef, voire dans une mémoire d'une station sol, lorsque le procédé d'apprentissage est mis en oeuvre directement dans l'aéronef considéré.

Alternativement, cette valeur de seuil prédéterminée S peut aussi être stockée dans une mémoire externe à l'aéronef lorsque le procédé d'apprentissage est mis en oeuvre en dehors de l'aéronef considéré.

Par ailleurs, l'utilisation des jeux de données d'apprentissage par le procédé d'apprentissage peut être mise en oeuvre lorsque le nombre N est supérieur ou égal à la valeur de seuil prédéterminée S.

Par suite, les jeux de données d'apprentissage sont utilisés par le procédé d'apprentissage lorsque la valeur de seuil prédéterminée S est atteinte pour le nombre N de jeux de données d'apprentissage. Une telle valeur de seuil prédéterminée S peut par exemple être égale à 1000.

En pratique, ledit au moins un modèle d'intelligence artificielle à apprentissage automatique peut comporter un premier modèle et un second modèle distinct du premier modèle, le premier modèle étant associé à une première phase de vol prédéterminée de ladite au moins une phase de vol prédéterminée et le second modèle étant associé à une seconde phase de vol prédéterminée de ladite au moins une phase de vol prédéterminée, la première phase de vol prédéterminée étant distincte de la seconde phase de vol prédéterminée.

Autrement dit, à chaque type de phases de vol prédéterminées identifié peut être associé un modèle d'intelligence artificielle à apprentissage automatique. Par suite, les jeux de données d'apprentissage peuvent être associés à un modèle particulier en identifiant à quel type de phases de vol prédéterminées ils se rapportent.

Lors d'un vol effectué par l'utilisateur, plusieurs calculs de masses peuvent être effectués et correspondre à différents instants t.

En outre, les phases de vol peuvent être préalablement choisies selon différents critères.

Selon une première variante de l'invention, ladite au moins une phase de vol prédéterminée peut être choisie en fonction d'une précision recherchée dudit au moins un modèle d'intelligence artificielle à apprentissage automatique pour estimer à tout moment la masse instantanée estimée de l'aéronef, ou d'un aéronef de même type, à partir d'un jeu de données de vol courant.

Autrement dit, la ou les phases de vol prédéterminées pendant lesquelles sont utilisés les jeux de données de vol permettent d'obtenir la précision recherchée du modèle d'intelligence artificielle à apprentissage automatique lors de son exploitation ultérieure.

Selon une deuxième variante de l'invention, ladite au moins une phase de vol prédéterminée peut être choisie en fonction d'une dispersion recherchée dudit au moins un modèle d'intelligence artificielle à apprentissage automatique pour estimer à tout moment la masse instantanée estimée de l'aéronef, ou d'un aéronef de même type, à partir d'un jeu de données de vol courant.

Comme précédemment pour la précision recherchée, la ou les phases de vol prédéterminées pendant lesquelles sont utilisés les jeux de données de vol permettent dans ce cas de parvenir à la dispersion recherchée du modèle d'intelligence artificielle à apprentissage automatique lors de son exploitation ultérieure.

Selon une troisième variante de l'invention, ladite au moins une phase de vol prédéterminée peut être choisie en fonction d'une diversité de la pluralité de vols effectués par l'utilisateur de l'aéronef, ou d'un aéronef de même type.

Dans ce cas, la ou les phases de vol prédéterminées pendant lesquelles sont utilisés les jeux de données de vol permettent de conférer un nombre important de jeux de données de vol. En effet, en exploitation du ou des modèles, les phases de vol prédéterminées seront alors couvertes de manière privilégiée.

En pratique, ledit au moins un modèle d'intelligence artificielle à apprentissage automatique peut être choisi parmi le groupe comportant les algorithmes de type arbre décisionnel, de type forêts aléatoires, de type machine à vecteurs de support, de type « Adaptive Boosting », de type rétropropagation, de type « gradient boosting », de type à réseaux de neurones, de type à réseaux de neurones profonds.

De tels types de modèles d'intelligence artificielle à apprentissage automatique sont en effet bien adaptés pour prédire la masse calculée d'un aéronef en fonction des jeux de données de vol disponibles et fournis par un système avionique existant.

L'invention et ses avantages apparaîtront avec plus de détails dans le cadre de la description qui suit avec des exemples donnés à titre illustratif en référence aux figures annexées qui représentent :
la figure 1, un schéma d'un aéronef en vue de côté apte à mettre en oeuvre un procédé d'apprentissage conforme à l'invention,
la figure 2, un logigramme représentatif des étapes d'un procédé d'apprentissage conforme à l'invention,
la figure 3, un schéma d'une étape d'utilisation de données d'apprentissage pour programmer un modèle d'intelligence artificielle à apprentissage automatique, conformément à l'invention, et
la figure 4, un logigramme représentatif des étapes permettant la réalisation d'au moins un test de cohérence prédéterminé, conformément à l'invention.

Les éléments présents dans plusieurs figures distinctes sont affectés d'une seule et même référence.

Comme déjà évoqué, l'invention se rapporte au domaine de l'estimation d'une masse instantanée estimée d'un aéronef à tout instant et notamment lors du vol d'un aéronef.

L'invention vise plus précisément, un procédé d'apprentissage d'au moins un modèle d'intelligence artificielle à apprentissage automatique configuré pour être mémorisé dans une mémoire équipant un aéronef ou une station sol.

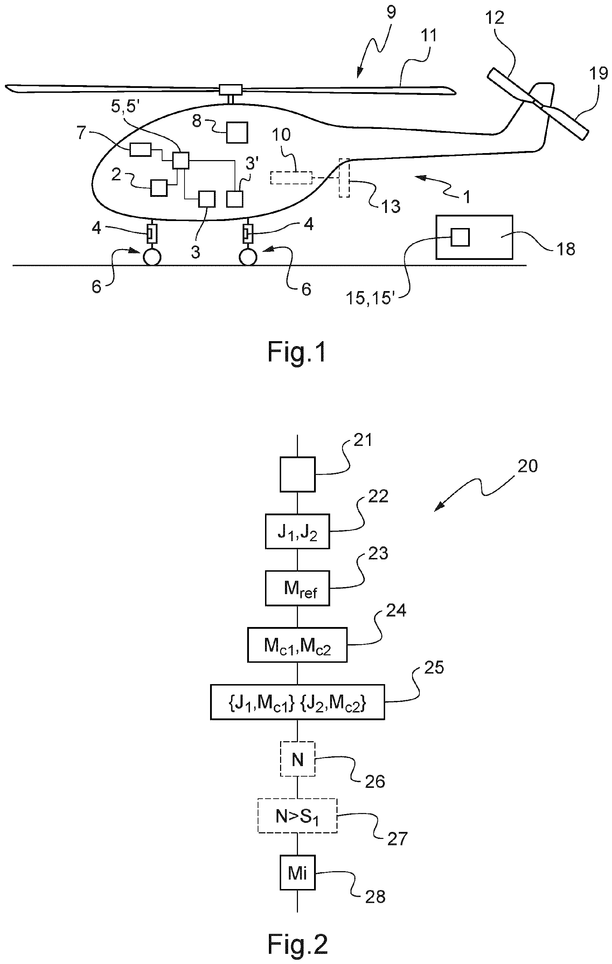

Tel que représenté à la figure 1, un aéronef 1, tel un giravion, comporte ainsi une mémoire 2. Une telle mémoire 2 est notamment apte à contenir un ou plusieurs modèles d'intelligence artificielle à apprentissage automatique développés pour être mis en oeuvre lors d'au moins une phase de vol prédéterminée d'un ou de plusieurs aéronefs 1 d'un même type.

De tels modèles d'intelligence artificielle à apprentissage automatique seront décrits plus en détail aux figures 2 à 4.

Un tel aéronef 1 comporte ainsi plusieurs senseurs 3, 3' de différentes natures pour acquérir au même instant t des données différentes et former au moins un jeu de données de vol J1, J2.

Ainsi, un jeu de données de vol comporte plusieurs données de vol distinctes les une des autres et acquises au même instant t, ces données étant chacune représentative d'un paramètre de vol.

Par exemple, les données de vol fournies par les senseurs 3, 3' peuvent présenter des données relatives à au moins deux paramètres de vol choisis parmi le groupe comportant une vitesse de l'aéronef 1 par rapport à l'air, une vitesse verticale de l'aéronef 1 par rapport au sol, une vitesse longitudinale de l'aéronef 1 par rapport au sol, une vitesse latérale de l'aéronef 1 par rapport au sol, une accélération verticale de l'aéronef 1 par rapport au sol, un débit de carburant alimentant un moteur 8, 10 de l'aéronef 1, une vitesse de rotation d'un rotor 9 équipant l'aéronef 1, une direction du vent, une vitesse du vent, une incidence de la voilure, une quantité de carburant embarquée dans l'aéronef 1, une trajectoire de l'aéronef 1 selon des mouvements en lacet, l'attitude de l'aéronef 1 définie par des angles d'assiette autour des axes de roulis, tangage, voire lacet, une densité de l'air, une température de l'air, une altitude de l'aéronef 1, une incidence d'une voilure de l'aéronef 1, une puissance consommée par au moins un moteur 8, 10 de l'aéronef 1, des positions de commandes de vol et des positions des pales 11, 12 d'un rotor 9, 19 ou d'une hélice 13.

En outre, les senseurs 3, 3' peuvent être liés à un système avionique pré équipant l'aéronef 1 comportant, mais sans s'y limiter, un système de gestion de vol FMS, un calculateur de données aérodynamiques ADC, un système de mesure de cap et d'attitude AHRS, un altimètre radar Rad Alt et un système de positionnement par satellites GNSS.

De plus, chaque senseur 3, 3' peut comporter un capteur physique ou plusieurs capteurs physiques ainsi que des moyens de traitement.

Ces senseurs 3, 3' peuvent alors être reliés par voie filaire ou non filaire à au moins un contrôleur de calcul de masse 5' équipant l'aéronef 1 pour traiter et/ou mémoriser les jeux de données de vol J1, J2.

Alternativement ou de manière complémentaire, les senseurs 3, 3' peuvent également être reliés par voie filaire ou non filaire à au moins un contrôleur de calcul de masse 15' équipant une station sol 18 pour traiter et/ou mémoriser les jeux de données de vol J1, J2 en dehors de l'aéronef 1.

Par ailleurs, le ou les contrôleurs de calcul de masse 5', 15' peuvent respectivement comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Avantageusement, un tel aéronef 1 peut comporter des capteurs 4 agencés sur des atterrisseurs 6. Ces capteurs 4 peuvent également être reliés par voie filaire ou non filaire avec le ou les contrôleurs de calcul de masse 5', 15' pour estimer une masse estimée Me de l'aéronef 1 et/ou avec au moins un contrôleur de cohérence 5, 15.

Ces capteurs 4 peuvent ainsi être choisis parmi le groupe comportant les capteurs de force, les capteurs de pression, les capteurs de déplacement, les capteurs de position et les capteurs de déformation.

En outre, le ou les contrôleurs de calcul de masse 5', 15' et le ou les contrôleurs de cohérence 5, 15 peuvent être disjoints l'un de l'autre ou former un ou des ensembles monolithiques, tels que représentés à la figure 1. Une telle représentation de la figure 1 n'est cependant donnée qu'à titre d'exemple non limitatif.

De plus, un tel aéronef 1 peut comporter une interface homme-machine 7 permettant par exemple au pilote de l'aéronef 1 de réaliser une mise à jour d'un paramètre lié à une information se rapportant à une masse théorique calculée Mtc de l'aéronef 1. En outre, une telle interface homme-machine 7 est alors reliée par voie filaire ou non filaire avec le ou les contrôleurs de cohérence 5, 15.

Tel que représenté à la figure 2, le procédé 20 comporte ainsi une réalisation 21 d'une pluralité de vols effectués par un utilisateur de l'aéronef 1 ou par un autre utilisateur d'un autre aéronef de même type.

Dés lors, pour au moins un vol parmi la pluralité de vols réalisés, le procédé 20 comporte une acquisition 22 en vol d'au moins un jeu de données de vol J1, J2 acquis au même instant t avec les senseurs 3, 3' précédemment décrits.

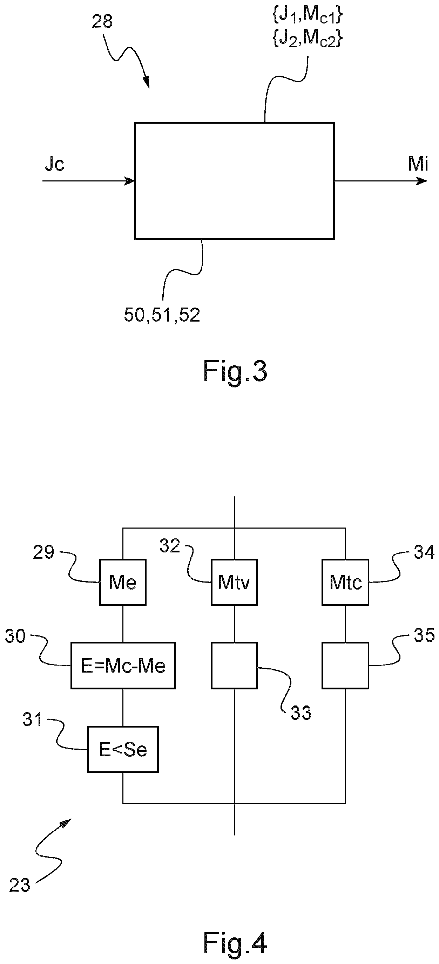

Le procédé 20 comporte ensuite une réalisation 23 d'au moins un test de cohérence prédéterminé avec le ou les contrôleurs 5, 15. Par exemple et tels que représentés à la figure 4, trois tests de cohérence peuvent être mis en oeuvre indépendamment en parallèle. Ce ou ces tests de cohérence permettent ainsi de vérifier qu'une masse de référence Mref fiable a d'ores et déjà été calculée et est donc mémorisée ou encore qu'elle est calculable.

En outre, le procédé 20 comporte un calcul 24 avec le ou les contrôleurs 5, 15 d'au moins une masse calculée Mc de l'aéronef 1 en fonction d'au moins une masse choisie parmi le groupe comportant une masse courante d'un carburant embarqué, une masse d'un carburant consommé, une masse préalablement mesurée de l'aéronef 1, une masse à vide de l'aéronef 1, une charge utile préalablement renseignée par un utilisateur, une masse mesurée par un équipement connecté tel un treuil ou une élingue et la masse de référence Mref.

Par suite, si l'un des tests de cohérence est validé, le procédé 20 comporte alors une mémorisation 25 du ou des jeux de données de vol J1, J2 acquis à l'instant t du vol et de ladite au moins une masse calculée Mc1, Mc2 au même instant t.

Le ou les contrôleurs de calcul de masse 5', 15' permettent alors d'associer chaque jeu de données de vol J1, J2 avec une masse calculée Mc1, Mc2 correspondante pour former un jeu de données d'apprentissage {J1, Mc1}, {J2, Mc2} du ou des modèles d'intelligence artificielle à apprentissage automatique éventuellement contenus dans la mémoire 2 embarquée.

Ainsi, un tel jeu de données d'apprentissage {J1, Mc1}, {J2, Mc2} est issu d'au moins un vol réalisé par l'utilisateur de l'aéronef 1 en conditions réelles lors d'une mission et non lors d'une phase d'essais réalisée par le constructeur de l'aéronef 1 Avant une utilisation des jeux de données d'apprentissage {J1, Mc1}, {J2, Mc2} et selon un exemple de réalisation avantageux de l'invention, le procédé 20 peut également comporter un décompte 26 pour compter un nombre N des jeux de données d'apprentissage {J1, Mc1}, {J2, Mc2}.

Dans ce cas, le procédé 20 comporte alors ensuite une comparaison 27 entre le nombre N et une valeur de seuil prédéterminée S. En outre, une utilisation 28 des jeux de données d'apprentissage {J1, Mc1}, {J2, Mc2} peut être mise en oeuvre lorsque ce nombre N est supérieur ou égal à la valeur de seuil prédéterminée S.

Les étapes de décompte 26 et de comparaison 27 étant optionnelles, le procédé 20 comporte néanmoins une utilisation 28 des jeux de données d'apprentissage {J1, Mc1}, {J2, Mc2} pour programmer le ou les modèles d'intelligence artificielle à apprentissage automatique 50, 51, 52 tels que représentés à la figure 3.

De tels modèles d'intelligence artificielle à apprentissage automatique 50, 51, 52 sont en outre configurés pour estimer à tout moment, à l'aide des jeux de données d'apprentissage, une masse instantanée estimée Mi de l'aéronef 1 ou d'un autre aéronef d'un même type à partir d'un jeu de données de vol courant Jc.

En effet, les jeux de données d'apprentissage permettent de définir des formules ou règles de calcul permettant de calculer, pour chaque phase de vol prédéterminée, une masse instantanée estimée Mi de l'aéronef 1 directement en fonction d'un jeu de données de vol courant Jc.

En outre, ledit au moins un modèle d'intelligence artificielle à apprentissage automatique 50, 51, 52 peut comporter un premier modèle 51 et un second modèle 52 distinct du premier modèle 51. Dans ce cas, le premier modèle 51 peut être associé à une première phase de vol prédéterminée de ladite au moins une phase de vol prédéterminée et le second modèle 52 peut être associé à une seconde phase de vol prédéterminée de ladite au moins une phase de vol prédéterminée. La première phase de vol prédéterminée est distincte de la seconde phase de vol prédéterminée.

Ainsi, un modèle d'intelligence artificielle à apprentissage automatique 50, 51, 52 particulier peut être associé à chaque phase de vol prédéterminée. Chaque modèle d'intelligence artificielle à apprentissage automatique 50, 51, 52 peut être avantageusement choisi parmi le groupe comportant les algorithmes de type arbre décisionnel, de type forêts aléatoires, de type machine à vecteurs de support, de type « Adaptive Boosting », de type rétropropagation, de type « gradient boosting », de type à réseaux de neurones, de type à réseaux de neurones profonds.

Par ailleurs, la ou les phases de vol prédéterminées peuvent être choisies en fonction d'une précision recherchée du ou des modèles d'intelligence artificielle à apprentissage automatique 50, 51, 52 pour estimer à tout moment la masse instantanée estimée Mi de l'aéronef 1, ou d'un aéronef de même type, à partir d'un jeu de données de vol courant Jc.

La ou les phases de vol prédéterminées peuvent également être choisies en fonction d'une dispersion recherchée du ou des modèles d'intelligence artificielle à apprentissage automatique 50, 51, 52 pour estimer à tout moment la masse instantanée estimée Mi de l'aéronef 1, ou d'un aéronef de même type, à partir d'un jeu de données de vol courant Jc.

En outre, la ou les phases de vol prédéterminées peuvent aussi être choisies en fonction d'une diversité recherchée de la pluralité de vols effectués par l'utilisateur de l'aéronef 1, ou d'un aéronef de même type.

Par ailleurs telle que représentée à la figure 4, la réalisation 23 d'au moins un test de cohérence prédéterminé peut donc comporter plusieurs tests mis en oeuvre indépendamment les uns des autres. La réalisation 23 est alors mise en oeuvre si l'un au moins des tests est validé.

Par suite, selon un exemple de test, la masse de référence Mref peut être définie sous la dépendance d'une masse estimée Me de l'aéronef 1 à partir des mesures issues de plusieurs capteurs 4.

Ce test comporte alors une estimation 29 de la masse estimée Me, un calcul 30 d'un écart E entre la masse calculée Mc et la masse estimée Me, puis une vérification 31 que l'écart E est inférieur à une valeur de seuil d'écart Se.

Selon un autre test, la masse de référence Mref peut être définie sous la dépendance d'une masse théorique vérifiée Mtv de l'aéronef 1. Le test comporte alors une vérification 32 de la masse théorique vérifiée Mtv, puis une vérification 33 d'un paramétrage de la masse théorique vérifiée Mtv.

Selon un autre test, la masse de référence Mref peut également être définie sous la dépendance d'une masse théorique calculée Mtc de l'aéronef 1, ladite masse théorique calculée Mtc étant obtenue par un calcul 34 au moyen du ou des contrôleurs de calcul de masses 5', 15' à partir d'au moins une information paramétrée avec l'interface homme-machine 7 de l'aéronef 1 par l'utilisateur préalablement à ce test de cohérence. Ce test comporte alors une vérification 35 que la ou les informations ont été paramétrées.

## Revendications

1. Procédé d'apprentissage (20) d'au moins un modèle d'intelligence artificielle à apprentissage automatique (50, 51, 52), ledit au moins un modèle d'intelligence artificielle à apprentissage automatique (50, 51, 52) étant configuré pour être mémorisé dans une mémoire (2) équipant un aéronef (1) ou une station sol, et développé pour être mis en oeuvre lors d'au moins une phase de vol prédéterminée d'au moins un aéronef (1) d'un même type,
ledit procédé (20) comportant une réalisation (21) d'une pluralité de vols, pour au moins un vol parmi ladite pluralité de vols, ledit procédé (20) comporte une acquisition (22) en vol d'au moins un jeu de données de vol (J1, J2) acquis avec plusieurs senseurs (3, 3') au même instant t,
**caractérisé en ce que**, pour ledit au moins un vol parmi ladite pluralité de vols, ledit procédé (20) comporte les étapes suivantes :
• réalisation (23) d'au moins un test de cohérence prédéterminé avec au moins un contrôleur de cohérence (5, 15), ledit au moins un test de cohérence permettant de vérifier qu'une masse de référence (Mref) fiable est calculée ou calculable,
• calcul (24) avec au moins un contrôleur de calcul de masse (5', 15') d'au moins une masse calculée (Mc1, Mc2) dudit aéronef (1) en fonction d'au moins une masse choisie parmi le groupe comportant une masse courante d'un carburant embarqué, une masse d'un carburant consommé, une masse préalablement mesurée dudit aéronef (1), une masse à vide dudit aéronef (1), une charge utile préalablement renseignée par un utilisateur, une masse mesurée par un équipement connecté, et ladite masse de référence (Mref),
• si ledit au moins un test de cohérence est validé, mémorisation (25) dudit au moins un jeu de données de vol (J1, J2) et de ladite au moins une masse calculée (Mc1, Mc2) audit instant t, chaque jeu de données de vol (J1, J2) mémorisé associé à une masse calculée (Mc1, Mc2) formant un jeu de données d'apprentissage ({J1, Mc1}, {J2, Mc2}) dudit au moins un modèle d'intelligence artificielle à apprentissage automatique (50, 51, 52),
et **en ce que** ledit procédé (20) comporte une utilisation (28) desdits jeux de données d'apprentissage ({J1, Mc1}, {J2, Mc2}) pour programmer ledit au moins un modèle d'intelligence artificielle à apprentissage automatique (50, 51, 52), ledit au moins un modèle d'intelligence artificielle à apprentissage automatique (50, 51, 52) étant configuré pour estimer à tout moment une masse instantanée estimée (Mi) dudit aéronef (1), ou d'un autre aéronef d'un même type, à partir d'un jeu de données de vol courant (Jc).

2. Procédé selon la revendication 1,
**caractérisé en ce que** ladite masse de référence (Mref) est définie en fonction d'une masse estimée (Me) dudit aéronef (1) à partir de mesures issues de plusieurs capteurs (4), chaque capteur (4) étant agencé sur chaque atterrisseur (6) dudit aéronef (1), ledit au moins un test de cohérence comprenant un calcul (30) d'un écart (E) entre ladite masse calculée (Mc) et ladite masse estimée (Me) puis une vérification (31) que ledit écart (E) est inférieur à une valeur de seuil d'écart (Se).

3. Procédé selon l'une quelconque des revendications 1 à 2, **caractérisé en ce que** ladite masse de référence (Mref) est définie en fonction d'une masse théorique vérifiée (Mtv) dudit aéronef (1), ledit au moins un test de cohérence comprenant une vérification (33) d'un paramétrage de ladite masse théorique vérifiée (Mtv).

4. Procédé selon l'une quelconque des revendications 1 à 3, **caractérisé en ce que** ladite masse de référence (Mref) est définie en fonction d'une masse théorique calculée (Mtc) dudit aéronef (1), ladite masse théorique calculée (Mtc) étant obtenue par ledit au moins un contrôleur de calcul de masse (5', 15') à partir d'au moins une information paramétrée avec une interface homme-machine (7) dudit aéronef (1) par ledit utilisateur préalablement audit au moins un test de cohérence, ledit au moins un test de cohérence comprenant une vérification (35) que ladite au moins une information a été paramétrée.

5. Procédé selon l'une quelconque des revendications 1 à 4, **caractérisé en ce que** lesdites données de vol (J1, J2) présentent des données relatives à au moins deux paramètres de vol choisis parmi le groupe comportant une vitesse de l'aéronef (1) par rapport à l'air, une vitesse verticale de l'aéronef (1) par rapport au sol, une vitesse longitudinale de l'aéronef (1) par rapport au sol, une vitesse latérale de l'aéronef (1) par rapport au sol, une accélération verticale de l'aéronef (1) par rapport au sol, un débit de carburant alimentant un moteur (8, 10) de l'aéronef (1), une vitesse de rotation d'un rotor (9) équipant l'aéronef (1), une direction du vent, une vitesse du vent, une quantité de carburant embarquée dans l'aéronef (1), une trajectoire de l'aéronef (1) selon des mouvements en lacet, l'attitude de l'aéronef (1), une densité de l'air, une température de l'air, une altitude de l'aéronef (1), une incidence d'une voilure de l'aéronef (1), une puissance consommée par un au moins un moteur (8, 10) de l'aéronef (1), des positions de commandes de vol et des positions des pales (11, 12) d'un rotor (9, 19) et/ou d'une hélice (13).

6. Procédé selon l'une quelconque des revendications 1 à 5, **caractérisé en ce que**, préalablement à ladite utilisation (28) desdits jeux de données d'apprentissage ({J1, Mc1}, {J2, Mc2}), ledit procédé (20) comporte un décompte (26) pour compter un nombre N desdits jeux de données d'apprentissage ({J1, Mc1}, {J2, Mc2}) et une comparaison (27) entre ledit nombre N et une valeur de seuil prédéterminée S.

7. Procédé selon la revendication 6,
**caractérisé en ce que** ladite utilisation (28) desdits jeux de données d'apprentissage ({J1, Mc1}, {J2, Mc2}) est mise en oeuvre lorsque ledit nombre N est supérieur ou égal à ladite valeur de seuil prédéterminée S.

8. Procédé selon l'une quelconque des revendications 1 à 7, **caractérisé en ce que** ledit au moins un modèle d'intelligence artificielle à apprentissage automatique (50, 51, 52) comporte un premier modèle (51) et un second modèle (52) distinct dudit premier modèle (51), ledit premier modèle (51) étant associé à une première phase de vol prédéterminée de ladite au moins une phase de vol prédéterminée et ledit second modèle (52) étant associé à une seconde phase de vol prédéterminée de ladite au moins une phase de vol prédéterminée, ladite première phase de vol prédéterminée étant distincte de ladite seconde phase de vol prédéterminée.

9. Procédé selon l'une quelconque des revendications 1 à 8, **caractérisé en ce que** ladite au moins une phase de vol prédéterminée est choisie en fonction d'une précision recherchée dudit au moins un modèle d'intelligence artificielle à apprentissage automatique (50, 51, 52) pour estimer à tout moment ladite masse instantanée estimée (Mi) dudit aéronef (1), ou d'un aéronef de même type, à partir d'un jeu de données de vol courant (Jc).

10. Procédé selon l'une quelconque des revendications 1 à 8, **caractérisé en ce que** ladite au moins une phase de vol prédéterminée est choisie en fonction d'une dispersion recherchée dudit au moins un modèle d'intelligence artificielle à apprentissage automatique (50, 51, 52) pour estimer à tout moment ladite masse instantanée estimée (Mi) dudit aéronef (1), ou d'un aéronef de même type, à partir d'un jeu de données de vol courant (Jc).

11. Procédé selon l'une quelconque des revendications 1 à 8, **caractérisé en ce que** ladite au moins une phase de vol prédéterminée est choisie en fonction d'une diversité de ladite pluralité de vols effectués par ledit utilisateur dudit aéronef (1), ou d'un aéronef de même type.

12. Procédé selon l'une quelconque des revendications 1 à 11, **caractérisé en ce que** ledit au moins un modèle d'intelligence artificielle à apprentissage automatique (50, 51, 52) est choisi parmi le groupe comportant les algorithmes de type arbre décisionnel, de type forêts aléatoires, de type machine à vecteurs de support, de type « Adaptive Boosting », de type rétropropagation, de type « gradient boosting », de type à réseaux de neurones, de type à réseaux de neurones profonds.

## Patentansprüche

1. Verfahren (20) zum Trainieren mindestens eines selbstlernenden Kl-Modells (50, 51, 52), wobei das mindestens eine selbstlernende KI-Modell (50, 51, 52) konfiguriert ist, um in einem Speicher (2) gespeichert zu sein, mit dem ein Luftfahrzeug (1) oder eine Bodenstation ausgestattet ist, und entwickelt ist, um während mindestens einer vorbestimmten Flugphase mindestens eines Luftfahrzeugs (1) eines gleichen Typs ausgeführt zu werden,
wobei das Verfahren (20) ein Durchführen (21) einer Mehrzahl von Flügen umfasst, wobei für mindestens einen Flug aus der Mehrzahl von Flügen das Verfahren (20) ein Erfassen (22) von mindestens einem Satz von mit mehreren Sensoren (3, 3') zum gleichen Zeitpunkt t erfassten Flugdaten (J1, J2) während des Fluges umfasst,
**dadurch gekennzeichnet, dass** für den mindestens einen Flug aus der Mehrzahl von Flügen das Verfahren (20) die folgenden Schritte umfasst:
• Durchführen (23) mindestens eines vorgegebenen Kohärenztests durch mindestens einen Kohärenzcontroller (5, 15), wobei der mindestens eine Kohärenztest überprüft, dass eine zuverlässige Referenzmasse (Mref) berechnet oder berechenbar ist,
• Berechnen (24) mindestens einer berechneten Masse (Me1, Mc2) des Luftfahrzeugs (1) durch mindestens einen Massenberechnungscontroller (5', 15') in Abhängigkeit von mindestens einer Masse, die aus der Gruppe ausgewählt ist, die eine aktuelle Masse eines an Bord befindlichen Treibstoffs, eine Masse von verbrauchtem Treibstoff, eine vorab gemessene Masse des Luftfahrzeugs (1), eine Leermasse des Luftfahrzeugs (1), eine vorab von einem Benutzer eingegebene Nutzlast, eine von einem angeschlossenen Gerät gemessene Masse und die Referenzmasse (Mref) umfasst,
• wenn der mindestens eine Kohärenztest bestätigt wird, Speichern (25) des mindestens einen Flugdatensatzes (J1, J2) und der mindestens einen berechneten Masse (Me1, Mc2) zum Zeitpunkt t, wobei jeder gespeicherte Flugdatensatz (J1, J2), der einer berechneten Masse (Mc1, Mc2) zugeordnet ist, einen Trainingsdatensatz ({J1, Mc1} , {J2, Mc2}) des mindestens einen selbstlernenden Kl-Modells (50, 51, 52) bildet,
und dass das Verfahren (20) eine Verwendung (28) der Trainingsdatensätze ({J1, Mc1}, {J2, Mc2}) zum Programmieren des mindestens einen selbstlernenden Kl-Modells (50, 51, 52) umfasst, wobei das mindestens eine selbstlernende KI-Modell (50, 51, 52) konfiguriert ist, um jederzeit eine geschätzte momentane Masse (Mi) des Luftfahrzeugs (1) oder eines anderen Luftfahrzeugs desselben Typs anhand eines aktuellen Flugdatensatzes (Jc) zu schätzen.

2. Verfahren nach Anspruch 1,
**dadurch gekennzeichnet, dass** die Referenzmasse (Mref) in Abhängigkeit von einer geschätzten Masse (Me) des Luftfahrzeugs (1) anhand von von mehreren Sensoren (4) stammenden Messungen definiert wird, wobei jeder Sensor (4) an jedem Fahrwerk (6) des Luftfahrzeugs (1) angeordnet ist, wobei der mindestens eine Kohärenztest ein Berechnen (30) einer Abweichung (E) zwischen der berechneten Masse (Mc) und der geschätzten Masse (Me) und dann ein Überprüfen (31) umfasst, dass die Abweichung (E) kleiner als ein Abweichungsschwellenwert (Se) ist.

3. Verfahren nach einem der Ansprüche 1 bis 2,
**dadurch gekennzeichnet, dass** die Referenzmasse (Mref) in Abhängigkeit von einer verifizierten theoretischen Masse (Mtv) des Luftfahrzeugs (1) definiert wird, wobei der mindestens eine Kohärenztest ein Überprüfen (33) einer Parametrierung der verifizierten theoretischen Masse (Mtv) umfasst.

4. Verfahren nach einem der Ansprüche 1 bis 3,
**dadurch gekennzeichnet, dass** die Referenzmasse (Mref) in Abhängigkeit von einer berechneten theoretischen Masse (Mtc) des Luftfahrzeugs (1) definiert wird, wobei die berechnete theoretische Masse (Mtc) von dem mindestens einen Massenberechnungscontroller (5', 15') aus mindestens einer Information erhalten wird, die mit einer Mensch-Maschine-Schnittstelle (7) des Luftfahrzeugs (1) durch den Benutzer vor dem mindestens einen Kohärenztest parametrisiert wurde, wobei der mindestens eine Kohärenztest ein Überprüfen (35) umfasst, dass die mindestens eine Information parametrisiert wurde.

5. Verfahren nach einem der Ansprüche 1 bis 4,
**dadurch gekennzeichnet, dass** die Flugdaten (J1, J2) Daten umfassen, die sich auf mindestens zwei Flugparameter beziehen, die aus der Gruppe ausgewählt sind, die eine Geschwindigkeit des Luftfahrzeugs (1) in Bezug auf die Luft, eine Vertikalgeschwindigkeit des Luftfahrzeugs (1) in Bezug auf den Boden, eine Longitudinalgeschwindigkeit des Luftfahrzeugs (1) in Bezug auf den Boden, eine Lateralgeschwindigkeit des Luftfahrzeugs (1) in Bezug auf den Boden, eine Vertikalbeschleunigung des Luftfahrzeugs (1) in Bezug auf den Boden, einen Durchsatz an Treibstoff, der ein Triebwerk (8, 10) des Luftfahrzeugs (1) versorgt, eine Drehgeschwindigkeit eines Rotors (9), mit dem das Luftfahrzeug (1) ausgestattet ist, eine Windrichtung, eine Windgeschwindigkeit, eine Menge des im Luftfahrzeug (1) mitgeführten Treibstoffs, eine Flugbahn des Luftfahrzeugs (1) bei Gierbewegungen, die Fluglage des Luftfahrzeugs (1), eine Luftdichte, eine Lufttemperatur, eine Flughöhe des Luftfahrzeugs (1), einen Anstellwinkel eines Flügels des Luftfahrzeugs (1), eine von mindestens einem Triebwerk (8, 10) des Luftfahrzeugs (1) verbrauchte Leistung, Positionen von Leitwerken und Positionen von Blättern (11, 12) eines Rotors (9, 19) und/oder eines Propellers (13) umfasst.

6. Verfahren nach einem der Ansprüche 1 bis 5,
**dadurch gekennzeichnet, dass** vor der Verwendung (28) der Trainingsdatensätze ({J1, Mc1} , {J2, Mc2}) das Verfahren (20) ein Zählen (26) zum Zählen einer Anzahl N der Trainingsdatensätze ({J1, Mc1}, {J2, Mc2}) und ein Vergleichen (27) zwischen der Anzahl N und einem vorgegebenen Schwellenwert S umfasst.

7. Verfahren nach Anspruch 6,
**dadurch gekennzeichnet, dass** die Verwendung (28) der Trainingsdatensätze ({J1, Mc1}, {J2, Mc2}) erfolgt, wenn die Zahl N größer oder gleich dem vorgegebenen Schwellenwert S ist.

8. Verfahren nach einem der Ansprüche 1 bis 7,
**dadurch gekennzeichnet, dass** das mindestens eine selbstlernende KI-Modell (50, 51, 52) ein erstes Modell (51) und ein von dem ersten Modell (51) verschiedenes zweites Modell (52) umfasst, wobei das erste Modell (51) mit einer ersten vorgegebenen Flugphase der mindestens einen vorgegebenen Flugphase verknüpft ist und das zweite Modell (52) mit einer zweiten vorgegebenen Flugphase der mindestens einen vorgegebenen Flugphase verknüpft ist, wobei die erste vorgegebene Flugphase von der zweiten vorgegebenen Flugphase verschieden ist.

9. Verfahren nach einem der Ansprüche 1 bis 8,
**dadurch gekennzeichnet, dass** die mindestens eine vorgegebene Flugphase in Abhängigkeit von einer angestrebten Genauigkeit des mindestens einen selbstlernenden Kl-Modells (50, 51, 52) bei der jederzeitigen Schätzung der geschätzten momentanen Masse (Mi) des Luftfahrzeugs (1) oder eines Luftfahrzeugs desselben Typs anhand eines aktuellen Flugdatensatzes (Je) gewählt wird.

10. Verfahren nach einem der Ansprüche 1 bis 8,
**dadurch gekennzeichnet, dass** die mindestens eine vorgegebene Flugphase in Abhängigkeit von einer angestrebten Streuung des mindestens einen selbstlernenden Kl-Modells (50, 51, 52) bei der jederzeitigen Schätzung der geschätzten momentanen Masse (Mi) des Luftfahrzeugs (1) oder eines Luftfahrzeugs desselben Typs anhand eines Satz aktueller Flugdaten (Je) gewählt wird.

11. Verfahren nach einem der Ansprüche 1 bis 8,
**dadurch gekennzeichnet, dass** die mindestens eine vorgegebene Flugphase in Abhängigkeit von einer Diversität der Mehrzahl von Flügen ausgewählt wird, die der Benutzer des Luftfahrzeugs (1) oder eines Luftfahrzeugs desselben Typs durchgeführt hat.

12. Verfahren nach einem der Ansprüche 1 bis 11,
**dadurch gekennzeichnet, dass** das mindestens eine selbstlernende KI-Modell (50, 51, 52) aus der Gruppe ausgewählt ist, die Algorithmen vom Entscheidungsbaum-Typ, vom Zufallswald-Typ, vom Stützvektor-Maschinen-Typ, vom "Adaptive Boosting"-Typ, vom Backpropagation-Typ, vom "Gradient Boosting"-Typ, vom Neuronalnetz-Typ, vom Deep-Neuronal-Network-Typ umfasst.

## Claims

1. Method of training (20) at least one machine learning artificial intelligence model (50, 51, 52), said at least one machine learning artificial intelligence model (50, 51, 52) being configured to be stored in a memory (2) equipping an aircraft (1) or a ground station and developed to be implemented during at least one predetermined flight phase of at least one aircraft (1) of the same type,
said method (20) comprising conducting (21) a plurality of flights, for at least one flight among said plurality of flights, said method (20) comprising acquiring (22) in-flight at least one set of flight data (J1, J2) acquired with several sensors (3, 3') at the same point in time t,
**characterized in that**, for said at least one flight among said plurality of flights, said method (20) comprises the following steps:
• conducting (23) at least one predetermined consistency test with at least one consistency controller (5, 15), said at least one consistency test making it possible to check that a reliable reference weight (Mref) is calculated or capable of being calculated,
• calculating (24) with at least one weight calculation controller (5', 15') at least one calculated weight (Mc1, Mc2) of said aircraft (1) based on at least one weight chosen from the group comprising a current boarded fuel weight, a consumed fuel weight, a previously measured weight of said aircraft (1), an empty weight of said aircraft (1), a payload previously input by a user, a weight measured by connected equipment and said reference weight (Mref),
• if said at least one consistency test is validated, storing (25) said at least one set of flight data (J1, J2) and said at least one calculated weight (Mc1, Mc2) at said point in time t, each stored set of flight data (J1, J2) associated with a calculated weight (Mc1, Mc2) forming a training data set ({J1, Md}, {J2, Mc2}) for said at least one machine learning artificial intelligence model (50, 51, 52),
and **in that** said method (20) comprises using (28) said training data sets ({J1, Mc1}, {J2, Mc2}) to program said at least one machine learning artificial intelligence model (50, 51, 52), said at least one machine learning artificial intelligence model (50, 51, 52) being configured to estimate at any time an estimated instantaneous weight (Mi) of said aircraft (1), or another aircraft of the same type, from a current set of flight data (Jc).

2. Method according to Claim 1,
**characterized in that** said reference weight (Mref) is defined based on an estimated weight (Me) of said aircraft (1) from measurements taken from several sensors (4), each sensor (4) being arranged on each landing gear (6) of said aircraft (1), said at least one consistency test comprising calculating (30) a deviation (E) between said calculated weight (Me) and said estimated weight (Me) then checking (31) that said deviation (E) is less than a deviation threshold value (Se).

3. Method according to any one of Claims 1 to 2,
**characterized in that** said reference weight (Mref) is defined based on a checked theoretical weight (Mtv) of said aircraft (1), said at least one consistency test comprising checking (33) a parameterization of said checked theoretical weight (Mtv).

4. Method according to any one of Claims 1 to 3,
**characterized in that** said reference weight (Mref) is defined based on a calculated theoretical weight (Mtc) of said aircraft (1), said calculated theoretical weight (Mtc) being obtained by said at least one weight calculation controller (5', 15') from at least one piece of information parameterized with a human-machine interface (7) of said aircraft (1) by said user prior to said at least one consistency test, said at least one consistency test comprising checking (35) that said at least one information has been parameterized.

5. Method according to any one of Claims 1 to 4,
**characterized in that** said flight data (J1, J2) includes data relating to at least two flight parameters chosen from the group comprising a speed of the aircraft (1) in relation to the air, a vertical speed of the aircraft (1) in relation to the ground, a longitudinal speed of the aircraft (1) in relation to the ground, a lateral speed of the aircraft (1) in relation to the ground, a vertical acceleration of the aircraft (1) in relation to the ground, a fuel flow rate supplying an engine (8, 10) of the aircraft (1), a rotational speed of a rotor (9) equipping the aircraft (1), a wind direction, a wind speed, a quantity of fuel on board the aircraft (1), a yaw trajectory of the aircraft (1) in yaw movements, the attitude of the aircraft (1), an air density, an air temperature, an altitude of the aircraft (1), an incidence of a wing of the aircraft (1), a power consumed by at least one engine (8, 10) of the aircraft (1), flight control positions and blade positions (11, 12) of a rotor (9, 19) and/or a propeller (13).

6. Method according to any one of Claims 1 to 5,
**characterized in that**, prior to said use (28) of said training data sets ({J1, Mc1}, {J2, Mc2}), said method (20) comprises a count (26) for counting a number N of said training data sets ({J1, Mc1}, {J2, Mc2}) and a comparison (27) between said number N and a predetermined threshold value S.

7. Method according to Claim 6,
**characterized in that** said use (28) of said training data sets ({J1, Mc1}, {J2, Mc2}) is implemented when said number N is greater than, or equal to, said predetermined threshold value S.

8. Method according to any one of Claims 1 to 7,
**characterized in that** said at least one machine learning artificial intelligence model (50, 51, 52) comprises a first model (51) and a second model (52) different from said first model (51), said first model (51) being associated with a first predetermined flight phase of said at least one predetermined flight phase and said second model (52) being associated with a second predetermined flight phase of said at least one predetermined flight phase, said first predetermined flight phase being different from said second predetermined flight phase.

9. Method according to any one of Claims 1 to 8,
**characterized in that** said at least one predetermined flight phase is chosen based on a required accuracy of said at least one machine learning artificial intelligence model (50, 51, 52) to estimate, at any time, said estimated instantaneous weight (Mi) of said aircraft (1), or an aircraft of the same type, based on a current set of flight data (Jc).

10. Method according to any one of Claims 1 to 8,
**characterized in that** said at least one predetermined flight phase is chosen based on a required dispersion of said at least one machine learning artificial intelligence model (50, 51, 52) to estimate, at any time, said estimated instantaneous weight (Mi) of said aircraft (1), or an aircraft of the same type, based on a current set of flight data (Jc).

11. Method according to any one of Claims 1 to 8,
**characterized in that** said at least one predetermined flight phase is chosen based on a diversity of said plurality of flights conducted by said user of said aircraft (1), or an aircraft of the same type.

12. Method according to any one of Claims 1 to 11,
**characterized in that** said at least one machine learning artificial intelligence model (50, 51, 52) is chosen from the group comprising decision tree algorithms, random forest algorithms, support vector machine algorithms, adaptive boosting algorithms, back-propagation algorithms, gradient boosting algorithms, neural network algorithms and deep neural network algorithms.
